# EUROPEAN PATENT APPLICATION

(11) **EP 4 438 446 A1**
(43) Date of publication of application: **02.10.2024**
(21) Application number: 23165506.9
(22) Date of filing: 30.03.2023
(51) Int. Cl.: B62D 55/084

(54) **SIDE GUIDE ASSEMBLY AND FOREST MACHINE TRACK**

(71) Applicant: Nordic Traction Oy, 32200 Loimaa (FI)
(72) Inventor: Broens, Renoldus, 24240 Salo (FI)
(74) Representative: Berggren Oy

(57) **Abstract**

The present invention relates to a side guide assembly for a forest machine track. The side guide assembly comprises a side guide (101) having grooves (106, 107) for receiving ends (110, 111) of a C-shaped track link (102), and clamping means (112, 113, 114, 115) for releasably clamping the ends (110, 111) of the C-shaped track link (102) against edges (116, 117) of the grooves (106, 107). The invention also relates to a forest machine track.

## Description

### TECHNICAL FIELD OF THE INVENTION

The present invention relates to a side guide assembly according to the preamble of the appended independent claim. The invention also relates to a forest machine track comprising at least one side guide assembly according to the invention.

### BACKGROUND OF THE INVENTION

Forest machines, such as harvesters and forwarders, are usually equipped with removable tracks to improve traction and flotation. A typical track for a forest machine comprises track plates, which are connected to each other by using track links and connecting links. The track links are attached to the ends of the track plates and the connecting links are used to connect the track links of adjacent track plates to each other. The track is provided with side guides to keep the track on top of tyres and to prevent the track to get misaligned. The side guides are attached to the track links.

A problem associated with the known forest machine tracks is that the side guides are welded to the track links. This makes replacing a side guide very difficult and time-consuming. Since the side guides are welded to the track links, replacing a side guide requires cutting off the existing side guide from the track link and then welding a new side guide to the track link.

### OBJECTIVES OF THE INVENTION

It is the main objective of the present invention to reduce or even eliminate the prior art problems presented above.

It is an objective of the present invention to provide a side guide assembly for a forest machine track. In more detail, it is an objective of the invention to provide a side guide assembly enabling a side guide to be attached to a track link without welding. It is a further objective of the invention to provide a side guide assembly enabling a side guide to be replaced quickly and easily.

It is also an objective of the present invention to provide a forest machine track having side guides that can be replaced quickly and easily.

In order to realise the above-mentioned objectives, the side guide assembly according to the invention is characterised by what is presented in the characterising portion of the appended independent claim. Advantageous embodiments of the invention are described in the dependent claims.

### DESCRIPTION OF THE INVENTION

A side guide assembly according to the invention for a forest machine track comprises a side guide having grooves for receiving ends of a C-shaped track link, and clamping means for releasably clamping the ends of the C-shaped track link against edges of the grooves.

The side guide assembly according to the invention can be used in a forest machine track to keep the track on top of tyres and to prevent the track to get misaligned. The forest machine track for which the side guide assembly according to the invention is suitable comprises track plates and C-shaped track links, which are attached to ends of the track plates. The C-shaped track links of adjacent track plates are connected to each other with connecting links. The side guide assemblies according to the invention can be removably attached to the C-shaped track links.

The side guide has opposite top and bottom ends in the lengthwise direction of the side guide. The bottom end of the side guide is meant to be arranged towards a centre section of a C-shaped track link when the side guide is attached to the C-shaped track link. The side guide has opposite outer and inner sides in the thickness direction of the side guide. The inner side of the side guide is meant to be arranged towards a tyre.

The side guide can be manufactured by using various techniques, such as by casting, forging or 3D printing. The side guide is preferably made of a metal, such as iron alloy, that can be hardened by heat treatment. The side guide may have various shapes and sizes. Preferably, the side guide has a shape that minimizes the chance of damaging the tyre when the two come into contact with each other. The top end of the side guide is preferably rounded. The length of the side guide can be, for example, 50-400 mm. The width of the side guide can be, for example, 25-300 mm. The thickness of the side guide can be, for example, 20-250 mm.

The grooves are arranged in opposite sides in the width direction of the side guide. The grooves are parallel to each other. Preferably, the grooves are arranged to extend in the thickness direction of the side guide. In other words, the longitudinal direction of the grooves is preferably perpendicular to the lengthwise direction and the width direction of the side guide. The length of the groove can be, for example, 20-250 mm. The width of the groove can be, for example, 5-50 mm. The depth of the groove can be, for example, 1-50 mm.

The grooves are designed to receive ends of a C-shaped track link. The ends of the C-shaped track link can be releasably clamped against edges of the grooves by using the clamping means. The ends of the C-shaped track link are clamped against the edges, which are closer to the bottom end of the side guide. In order to clamp the ends of the C-shaped track link against the edges of the grooves, the clamping means move the bottom end of the side guide away from the centre section of the C-shaped track link. When the ends of the C-shaped track link are clamped against the edges of the grooves, the side guide remains tightly attached to the C-shaped track link.

An advantage of the side guide assembly according to the invention is that the side guide can be attached to and detached from a C-shaped track link quickly and easily. The side guide can be attached to a C-shaped track link without welding and detached from the C-shaped track link without cutting. Another advantage of the side guide assembly according to the invention is that the side guide that has been attached to a C-shaped track link can be replaced quickly and easily.

According to an embodiment of the invention the clamping means comprises a wedge arrangeable between the side guide and the C-shaped track link. The wedge can be arranged between the bottom end of the side guide and the centre section of the C-shaped track link. The wedge is used to move the bottom end of the side guide away from the centre section of the C-shaped track link so that the ends of the C-shaped track link can be clamped against the edges of the grooves. When the side guide is attached to the C-shaped track link or detached from the C-shaped track link, the wedge itself is moved in a direction parallel to the longitudinal direction of the grooves.

The wedge can be made of steel or any other material that does not deform over time under pressure. The length of the wedge can be, for example, 10-150 mm. The width of the wedge can be, for example, 20-200 mm. The thickness of the wedge can be, for example, 5-100 mm.

According to an embodiment of the invention the side guide comprises a slot for receiving the wedge. The slot is in the bottom end of the side guide. The slot is shaped to correspond to the shape of the wedge. The slot is preferably sized based on the size of the wedge so that its dimensions are only slightly larger than the dimensions of the wedge. The width of the slot can be, for example, 21-201 mm. The length of the slot can be, for example, 20-250 mm. The length of the slot can be the same as the thickness of the side guide. The slot facilitates the attachment of the side guide to the C-shaped track link as the wedge stays better in place.

According to an embodiment of the invention the slot and the wedge have sloped surfaces arrangeable against each other. The sloped surfaces enable the wedge, when it is arranged in the slot and moved in the longitudinal direction of the grooves, to simultaneously move the side guide in a perpendicular direction away from the centre section of the C-shaped track link.

According to an embodiment of the invention a bottom end of the side guide comprises a through-hole and the wedge comprises a groove, a through-hole or a threaded blind hole that is essentially concentric with the through-hole of the side guide when the wedge is arranged in the slot. The through-hole of the side guide is arranged to extend in the longitudinal direction of the grooves. When the wedge is arranged in the slot, the groove, the through-hole, or the threaded blind hole of the wedge extends in a direction that is parallel to the longitudinal direction of the through-hole of the side guide.

According to an embodiment of the invention the clamping means comprises a bolt with a washer and a nut, wherein the bolt is arrangeable through the through-hole of the side guide and the groove or the through-hole of the wedge and the nut is attachable to an end of the bolt for securing the wedge in the slot.

According to an embodiment of the invention the clamping means comprises a bolt with a washer, wherein the bolt is arrangeable through the through-hole of the side guide into the threaded blind hole of the wedge for securing the wedge in the slot.

According to an embodiment of the invention the bottom end of the side guide comprises a through-hole and the clamping means comprises a bolt that is arrangeable through the through-hole of the side guide into a threaded through-hole of the C-shaped track link for securing the side guide in the C-shaped track link.

According to an embodiment of the invention the bottom end of the side guide comprises at least one projecting part arrangeable against an edge of the C-shaped track link. The projecting part is preferably designed to be arranged against an edge of the centre section of the C-shaped track link. The projecting part prevents the side guide from moving in the longitudinal direction of the grooves when the side guide is attached to the C-shaped track link.

According to an embodiment of the invention the side guide is made of iron alloy.

The present invention also relates to a forest machine track. A forest machine track according to the invention comprises a plurality of track plates, a plurality of C-shaped track links attached to ends of the plurality of track plates, and a plurality of connecting links with which the C-shaped track links of adjacent track plates are connected to each other. In the forest machine track according to the invention, to at least one of the plurality of C-shaped track links is attached a side guide assembly according to the invention.

The forest machine track according to the invention can be fitted around two or more tyres of a forest machine, such as a harvester or a forwarder, to improve traction and flotation. When fitted, the longitudinal direction of the track plates is essentially perpendicular to the direction of travel.

In the forest machine track according to the invention, the track plates are connected to each other by using the C-shaped track links and the connecting links. The C-shaped track links are attached to the ends of the track plates and the connecting links are used to connect the C-shaped track links of adjacent track plates to each other. The C-shaped track link consists of two curved end sections connected with a centre section that is preferably straight. The curved end sections of the C-shaped track links engage with the connecting links.

In the forest machine track according to the invention, at least one of the C-shaped track links is provided with a side guide assembly to keep the forest machine track on top of tyres and to prevent the forest machine track to get misaligned. Preferably, a side guide assembly is attached to every C-shaped track link.

An advantage of the forest machine track according to the invention is that, since the side guide is attached to the C-shaped track link without welding, the side guide can be replaced quickly and easily. This allows a damaged forest machine track to be repaired at a forestry worksite.

The exemplary embodiments of the invention presented in this text are not interpreted to pose limitations to the applicability of the appended claims. The verb "to comprise" is used in this text as an open limitation that does not exclude the existence of also unrecited features. The features recited in the dependent claims are mutually freely combinable unless otherwise explicitly stated.

The exemplary embodiments presented in this text and their advantages relate by applicable parts to the side guide assembly as well as the forest machine track according to the invention, even though this is not always separately mentioned.

### BRIEF DESCRIPTION OF THE DRAWINGS

- Figs. 1A-1B: illustrate a side guide assembly according to an embodiment of the invention attached to a C-shaped track link,
- fig. 2: illustrates an exploded view of the assembly as shown in figs. 1A-1B, and
- fig. 3: illustrates a partial view of a forest machine track according to an embodiment of the invention.

### DETAILED DESCRIPTION OF THE DRAWINGS

The same reference signs are used of the same or like components in different embodiments.

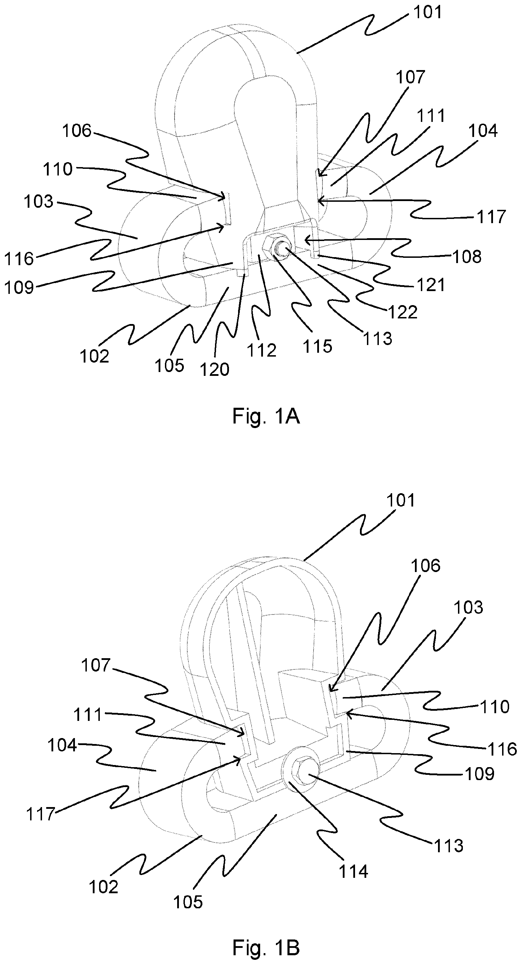

Figs. 1A-1B illustrate, seen from different directions, a side guide assembly according to an embodiment of the invention attached to a C-shaped track link.

The side guide assembly comprises a side guide 101 that is releasably attached to the C-shaped track link 102. The C-shaped track link 102 consists of curved end sections 103 and 104, and a centre section 105 between them. The C-shaped track link 102 can be attached to a track plate in a forest machine track.

The side guide 101 has grooves 106 and 107 in opposite sides in the width direction of the side guide 101. The grooves 106 and 107 are parallel to each other, and they extend in the thickness direction of the side guide 101. The side guide 101 also has a slot 108 in a bottom end 109 of the side guide 101.

As shown in figs. 1A-1B, the side guide 101 is arranged in connection with the C-shaped track link 102 in such a manner that an end 110 of the C-shaped track link 102 is in the groove 106, an end 111 of the C-shaped track link 102 is in the groove 107 and the bottom end 109 of the side guide 101 is facing the centre section 105 of the C-shaped track link 102. The side guide assembly comprises a wedge 112, a bolt 113 with a washer 114 and a nut 115 with which the ends 110 and 111 of the C-shaped track link 102 have been clamped against edges 116 and 117 of the grooves 106 and 107, respectively.

The wedge 112 is arranged in the slot 108, between the side guide 101 and the C-shaped track link 102. The wedge 112 and the slot 108 have sloped surfaces, which are arranged against each other. The bottom end 109 of the side guide 101 has a through-hole 118 that extends in the longitudinal direction of the grooves 106 and 107. The wedge 112 has a groove 119 that is essentially concentric with the through-hole 118 of the side guide 101 and that extends in a direction parallel to the longitudinal direction of the through-hole 118 of the side guide 101 when the wedge 112 is in the slot 108. The bolt 113 is arranged through the through-hole 118 of the side guide 101 and the groove 119 of the wedge 112. The nut 115 is attached to an end of the bolt 113 for securing the wedge 112 in the slot 108.

The clamping of the ends 110 and 111 of the C-shaped track link 102 against the edges 116 and 117 of the grooves 106 and 107 was achieved by tightening the bolt 113 and/or the nut 115. When the bolt 113 and/or the nut 115 was tightened, the wedge 112 moved in the longitudinal direction of the grooves 106 and 107. Because of the sloped surfaces in the wedge 112 and the slot 108, the wedge 112 simultaneously moved the side guide 101 in a perpendicular direction away from the centre section 105 of the C-shaped track link 102. The bolt 113 and/or the nut 115 were tightened until the ends 110 and 111 of the C-shaped track link 102 were clamped against the edges 116 and 117 of the grooves 106 and 107. The side guide 101 can be detached from the C-shaped track link 102 by loosening the bolt 113 and/or the nut 115, whereby the clamping of the ends 110 and 111 of the C-shaped track link 102 against the edges 116 and 117 of the grooves 106 and 107 is released.

The bottom end 109 of the side guide 101 comprises projecting parts 120 and 121, which are arranged against an edge 122 of the centre section 105 of the C-shaped track link 102. The projecting parts 120 and 121 prevent the side guide 101 from moving in the longitudinal direction of the grooves 106 and 107 when the side guide 101 is attached to the C-shaped track link 102.

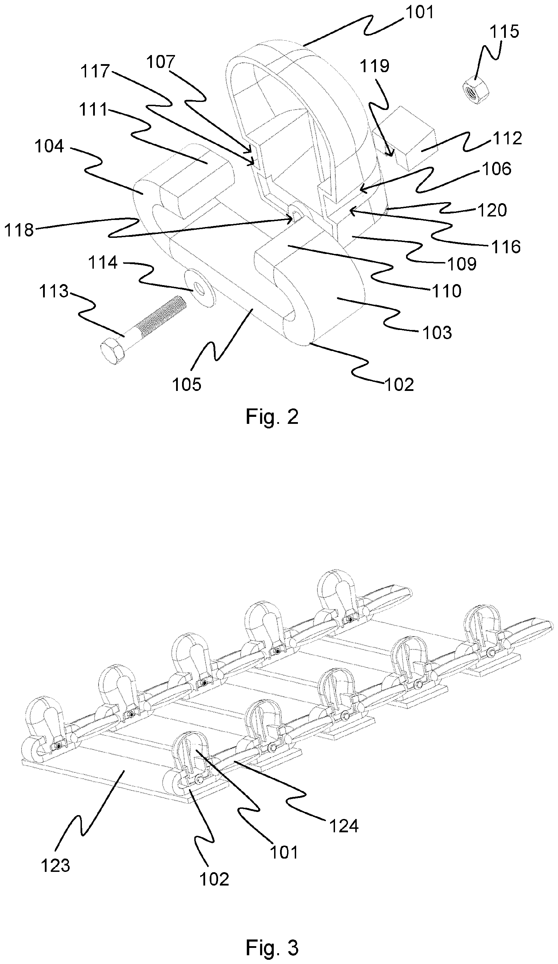

Fig. 2 illustrates an exploded view of the assembly as shown in figs. 1A-1B.

Fig. 3 illustrates a partial view of a forest machine track according to an embodiment of the invention. The forest machine track can be fitted around two or more tyres of a forest machine to improve traction and flotation.

The forest machine track of fig. 3 comprises track plates 123, which are connected to each other by using C-shaped track links 102 and connecting links 124. The C-shaped track links 102 are attached to the ends of the track plates 123. The C-shaped track links 102 of adjacent track plates 123 are connected to each other with the connecting links 124. Each connecting link 124 is engaged with two C-shaped track links 102. When the forest machine track is fitted around tyres, the longitudinal direction of the track plates 123 is essentially perpendicular to the direction of travel.

A side guide 101 is releasably attached to each C-shaped track link 102. The side guides 101 are used to keep the forest machine track on top of tyres and to prevent the forest machine track to get misaligned.

Only advantageous exemplary embodiments of the invention are described in the figures. It is clear to a person skilled in the art that the invention is not restricted only to the examples presented above, but the invention may vary within the limits of the claims presented hereafter. Some possible embodiments of the invention are described in the dependent claims, and they are not to be considered to restrict the scope of protection of the invention as such.

## Claims

1. A side guide assembly for a forest machine track, **characterised in that** the side guide assembly comprises:
- a side guide having grooves for receiving ends of a C-shaped track link, and
- clamping means for releasably clamping the ends of the C-shaped track link against edges of the grooves.

2. The side guide assembly according to claim 1, **characterised in that** the clamping means comprises a wedge arrangeable between the side guide and the C-shaped track link.

3. The side guide assembly according to claim 2, **characterised in that** the side guide comprises a slot for receiving the wedge.

4. The side guide assembly according to claim 3, **characterised in that** the slot and the wedge have sloped surfaces arrangeable against each other.

5. The side guide assembly according to claim 3 or 4, **characterised in that** a bottom end of the side guide comprises a through-hole and the wedge comprises a groove, a through-hole or a threaded blind hole that is essentially concentric with the through-hole of the side guide when the wedge is arranged in the slot.

6. The side guide assembly according to claim 5, **characterised in that** the clamping means comprises a bolt with a washer and a nut, wherein the bolt is arrangeable through the through-hole of the side guide and the groove or the through-hole of the wedge and the nut is attachable to an end of the bolt for securing the wedge in the slot.

7. The side guide assembly according to claim 5, **characterised in that** the clamping means comprises a bolt with a washer, wherein the bolt is arrangeable through the through-hole of the side guide into the threaded blind hole of the wedge for securing the wedge in the slot.

8. The side guide assembly according to claim 1, **characterised in that** the bottom end of the side guide comprises a through-hole and the clamping means comprises a bolt that is arrangeable through the through-hole of the side guide into a threaded through-hole of the C-shaped track link for securing the side guide in the C-shaped track link.

9. The side guide assembly according to any of the preceding claims, **characterised in that** the bottom end of the side guide comprises at least one projecting part arrangeable against an edge of the C-shaped track link.

10. The side guide assembly according to any of the preceding claims, **characterised in that** the side guide is made of iron alloy.

11. A forest machine track, comprising:
- a plurality of track plates,
- a plurality of C-shaped track links attached to ends of the plurality of track plates, and
- a plurality of connecting links with which the C-shaped track links of adjacent track plates are connected to each other,
**characterised in that** to at least one of the plurality of C-shaped track links is attached a side guide assembly according to any of the preceding claims.
